# EUROPEAN PATENT APPLICATION

(11) **EP 4 803 329 A1**
(43) Date of publication of application: **09.09.2026**
(21) Application number: 26157589.8
(22) Date of filing: 10.02.2026
(51) Int. Cl.: B60C 11/03, B60C 11/12

(54) **TIRE**

(30) Priority: 07.03.2025 JP 2025036753
(71) Applicant: Sumitomo Rubber Industries, Ltd., Kobe-shi, Hyogo 651-0072 (JP)
(72) Inventor: NAKANO, Kosuke, Kobe-shi, Hyogo, 651-0072 (JP); MEGURO, Yuya, Kobe-shi, Hyogo, 651-0072 (JP)
(74) Representative: Manitz Finsterwald Patent- und Rechtsanwaltspartnerschaft mbB

(57) **Abstract**

Provided is a tire capable of enhancing both on-ice performance and dry performance. The tire is a tire 1 including a tread portion 2 including three circumferential grooves 3 and four land portions 4. The land portions 4 include an outer crown land portion 4B adjacent to an outer shoulder land portion 4A. A tire equator C is located on a ground-contact surface 4a of the outer crown land portion 4B. The outer crown land portion 4B has a largest width W2 in a tire axial direction, and the width W2 is 25% or more of a tread width TW. Each of blocks 13 of the four land portions 4 has a block edge 15 which defines a contour of a ground-contact surface 13a. An outer crown block edge sum ΣA is 35% to 50% of a pattern block edge sum ΣB.

## Description

### BACKGROUND OF THE INVENTION

### Field of the Invention

The present invention relates to a tire.

### Background Art

Japanese Laid-Open Patent Publication No. 2021-195048 describes a pneumatic tire in which a plurality of blocks are provided. The plurality of blocks are provided with a plurality of sipes. This type of tire is expected to exhibit excellent on-ice cornering performance.

In general, a tire designed to enhance such on-ice cornering performance tends to cause a decrease in the stiffness of land portions, which leads to deterioration of steering stability on a dry road surface (hereinafter referred to as "dry performance").

The present invention has been made in view of the abovementioned circumstances, and a main object of the present invention is to provide a tire capable of enhancing both on-ice performance and dry performance.

### SUMMARY OF THE INVENTION

The present invention is directed to a tire including a tread portion having a designated mounting direction to a vehicle, wherein: the tread portion includes an inner tread end located on an inner side of the vehicle when the tire is mounted on the vehicle, an outer tread end located on an outer side of the vehicle when the tire is mounted on the vehicle, and a tread width which is a distance in a tire axial direction from the inner tread end to the outer tread end; the tread portion includes three circumferential grooves extending continuously in a tire circumferential direction with a groove width of 3.0 mm or more, and four land portions demarcated by the three circumferential grooves; each of the four land portions includes a plurality of blocks demarcated by a plurality of lateral grooves which completely extend across the land portion in the tire axial direction with a groove width of 1.0 mm or more; the land portions include an outer crown land portion adjacent to an outer shoulder land portion including the outer tread end; a tire equator is located on a ground-contact surface of the outer crown land portion; the outer crown land portion has a largest width in the tire axial direction among the four land portions; the width of the outer crown land portion is 25% or more of the tread width; each of the plurality of blocks has a block edge which defines a contour of a ground-contact surface thereof, and is formed with a plurality of sipes having a width of less than 1.0 mm; and an outer crown block edge sum ΣA which is a sum of lengths of all the block edges included in the outer crown land portion is 35% to 50% of a pattern block edge sum ΣB which is a sum of lengths of all the block edges included in the four land portions.

As a result of adopting the above-described configuration, the tire of the present invention can enhance both on-ice performance and dry performance.

### BRIEF DESCRIPTION OF THE DRAWINGS

FIG. 1 is a development view of a tread portion of a tire according to one embodiment of the present invention;
FIG. 2 is a development view of the tread portion;
FIG. 3A is a plan view of a block for describing the "length" of a block edge;
FIG. 3B is a plan view of a sipe for describing the "length" of the sipe;
FIG. 4 is an enlarged view of FIG. 1;
FIG. 5 is an enlarged view of FIG. 1;
FIG. 6 is an enlarged view of FIG. 1;
FIG. 7A is an enlarged view of FIG. 1;
FIG. 7B is a cross-sectional view taken along a line A-A in FIG. 7A;
FIG. 8 is an enlarged view of FIG. 1;
FIG. 9 is a cross-sectional view taken along a line B-B in FIG. 8;
FIG. 10 is a development view of the tread portion; and
FIG. 11 is a cross-sectional view taken along a line C-C in FIG. 10.

### DETAILED DESCRIPTION

Hereinafter, an embodiment of the present invention will be described in detail with reference to the drawings. The drawings contain exaggerated expressions and expressions that differ from the dimensional ratio of the actual structure in order to help the understanding of the content of the present invention. In addition, the same or common elements are denoted by the same reference characters throughout each embodiment, and the redundant description thereof is sometimes omitted. Furthermore, the specific configurations shown in the embodiment and drawings are provided for understanding the content of the present invention. Therefore, the present invention is not limited to the specific configurations illustrated.

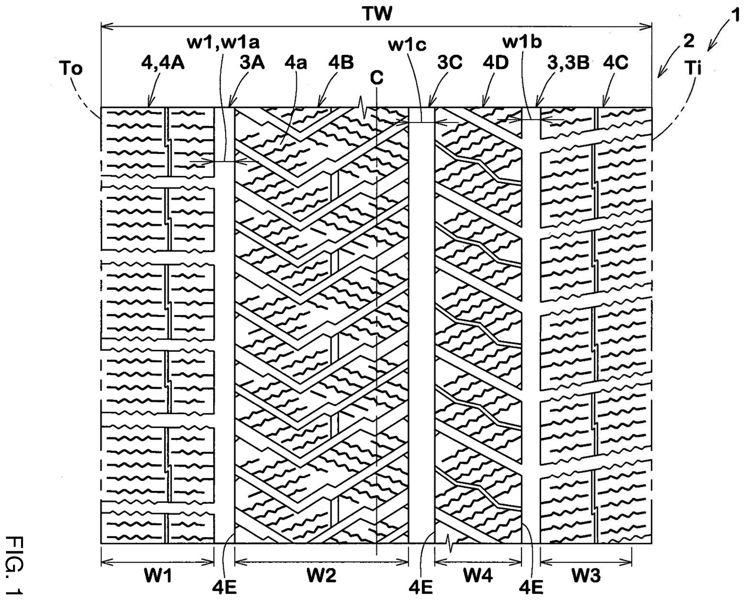

FIG. 1 is a development view of a tread portion 2 of a tire 1 of the present embodiment. As shown in FIG. 1, the tire 1 of the present embodiment is used, for example, as a pneumatic tire, for passenger cars, intended for use in winter. However, the present invention is not limited to such an application and may also be applied to heavy duty pneumatic tires for trucks and buses, etc., and non-pneumatic tires the interior of which is not filled with pressurized air.

As shown in FIG. 1, the tread portion 2 of the present embodiment has a designated mounting direction to a vehicle. Accordingly, the tread portion 2 includes an inner tread end Ti located on the inner side of the vehicle when the tire 1 is mounted on the vehicle, an outer tread end To located on the outer side of the vehicle when the tire 1 is mounted on the vehicle, and a tread width TW which is the distance in the tire axial direction from the inner tread end Ti to the outer tread end To. The inner tread end Ti and the outer tread end To refer to outermost ground-contact positions in the tire axial direction in a standardized load-applied state where 75% of a standardized load is applied to the tire 1 in a standardized state and the tire 1 is brought into contact with a flat surface at a camber angle of 0°.

In the case of a tire for which various standards are defined, the "standardized state" is a state where the tire is fitted on a standardized rim (not shown) and inflated to a standardized internal pressure and no load is applied to the tire. In the case of a non-pneumatic tire or a tire for which various standards are not defined, the standardized state means a standard use state, corresponding to the purpose of use of the tire, where no load is applied to the tire. In the present specification, unless otherwise specified, dimensions and the like of components are values measured in the standardized state. It should be noted that each configuration described in this specification tolerates the usual errors contained in a rubber molded product.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In addition, in the case of a non-pneumatic tire or a tire for which various standards are not defined, the "standardized load" is a load applied to one tire in a standard mounting state of tires. The "standard mounting state" refers to a state where the tires are mounted on a standard vehicle corresponding to the purpose of use of the tires and the vehicle is stationary on a flat road surface in a state where the vehicle can run.

The tread portion 2 includes three circumferential grooves 3 extending continuously in the tire circumferential direction with a groove width w1 of 3.0 mm or more, and four land portions 4 demarcated by the three circumferential grooves 3. Such a tire 1 ensures edge components provided by edges 4E, along the circumferential grooves 3, of the land portions 4 and the stiffness of the land portions 4, thereby exhibiting basic on-ice performance and dry performance.

The land portions 4 include an outer shoulder land portion 4A including the outer tread end To, and an outer crown land portion 4B adjacent to the outer shoulder land portion 4A. A tire equator C is located on a ground-contact surface 4a of the outer crown land portion 4B. On such an outer crown land portion 4B, a large ground-contact pressure acts during straight running, and a large lateral force acts during cornering. In this specification, the "ground-contact surface" refers to a surface of the tread portion 2 that is in contact with the flat surface in the standardized load-applied state, and is referred to as ground-contact surface of the tread portion 2, ground-contact surfaces of the land portions 4, ground-contact surfaces of blocks described later, etc.

The outer crown land portion 4B has a largest width W2 in the tire axial direction among the four land portions 4. The width W2 of the outer crown land portion 4B is 25% or more of the tread width TW. Such an outer crown land portion 4B has high lateral stiffness and therefore improves dry performance.

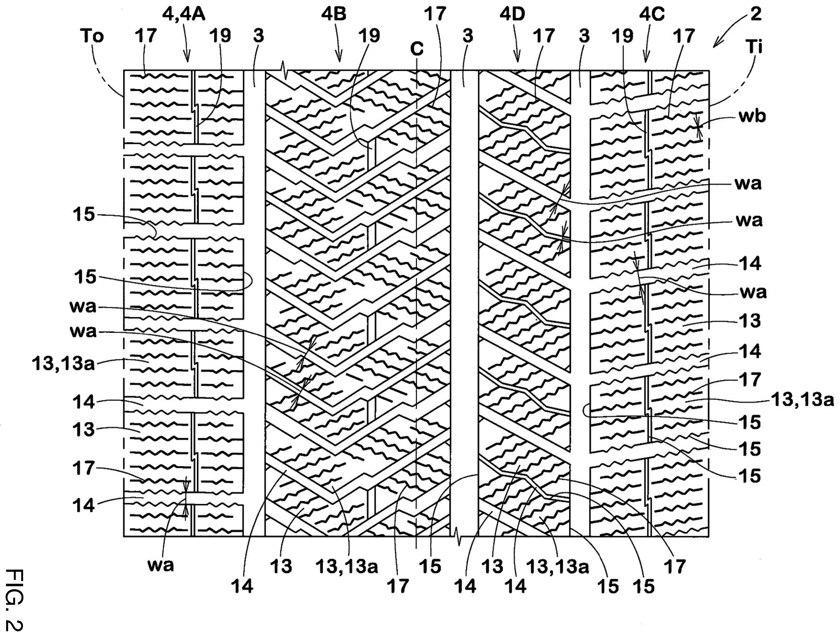

FIG. 2 is a development view of the tread portion 2. As shown in FIG. 2, each of the four land portions 4 includes a plurality of blocks 13. The respective blocks 13 are demarcated by a plurality of lateral grooves 14 which completely extend across the land portion 4 in the tire axial direction. Each lateral groove 14 has a groove width wa of 1.0 mm or more.

Each block 13 has a block edge 15 which defines the contour of a ground-contact surface 13a of the block 13. Each block 13 is formed with a plurality of sipes 17 having a width wb of less than 1.0 mm. Such a tire 1 has large edge components provided by the block edges 15 of the plurality of blocks 13 and the plurality of sipes 17, ensures the lateral stiffness of the blocks 13 of each land portion 4, and thus exhibits basic on-ice performance and dry performance. The block edges 15 are defined, for example, by the circumferential grooves 3, the lateral grooves 14, and sub-grooves 19 described later. Each block edge 15 exhibits more basic on-ice performance. In this specification, the "groove width", the "width (of the sipe)", and the "width (of the land portion)" refer to lengths (widths) on the ground-contact surface, and, , if a notch portion (not shown) composed of a gently sloping surface or the like is formed at the intersection of the ground-contact surface and a groove wall or sipe wall, these widths are specified on the assumption that the notch portion does not exist.

The sum of the lengths of all block edges 15 included in the outer crown land portion 4B is referred to as outer crown block edge sum ΣA. The sum of the lengths of all block edges 15 included in the four land portions 4 is referred to as pattern block edge sum ΣB. In this case, the outer crown block edge sum ΣA is set to 35% to 50% of the pattern block edge sum ΣB. Since the outer crown block edge sum ΣA is 35% or more of the pattern block edge sum ΣB, the sum of the lengths of the block edges 15 in the outer crown land portion 4B is ensured to be relatively larger than the sum of the lengths of the block edges 15 in each of the other land portions 4. Accordingly, a great edge effect is exhibited at the outer crown land portion 4B, on which a large ground-contact pressure or a large lateral force acts, whereby on-ice performance is improved.

In order to further enhance such an effect, the outer crown block edge sum ΣA is preferably 38% or more and more preferably 40% or more of the pattern block edge sum ΣB. In addition, since the outer crown block edge sum ΣA is 50% or less of the pattern block edge sum ΣB, an excessive increase in the sum of the lengths of the block edges 15 in the outer crown land portion 4B is suppressed, and the ground-contact pressure and the lateral force acting on each land portion 4 become appropriate. Accordingly, dry performance and on-ice performance are improved. In order to further enhance such an effect, the outer crown block edge sum ΣA is preferably 49% or less and more preferably 48% or less of the pattern block edge sum ΣB in combination with any of the above lower limits. As an example, the outer crown block edge sum ΣA is preferably 38% to 49% and more preferably 40% to 48% of the pattern block edge sum ΣB.

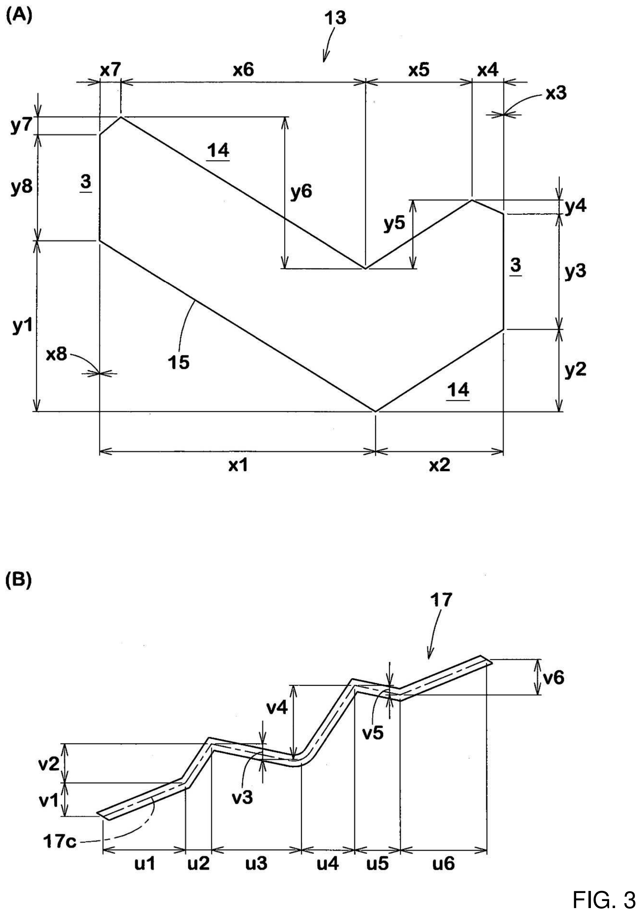

FIG. 3A is a plan view of the block 13 for describing the "length" of the block edge 15. FIG. 3A shows the "length" of the block edge 15 in one block 13. In this specification, the "length" of the block edge 15 used to calculate the block edge sum, the pattern block edge sum, and a pattern edge sum described later is specified as follows. The "length" is distinguished into a component xi in the tire axial direction and a component yi in the tire circumferential direction of each block edge 15 adjacent to any of the circumferential grooves 3, the lateral grooves 14, or the sub-grooves 19 (shown in FIG. 2). The length of the block edge 15 of the block 13 shown in FIG. 3A is distinguished into components xi (x1, x2, ..., x8) in the tire axial direction and components yi (y1, y2, ..., y8) in the tire circumferential direction. In this case, the maximum value of i is 8. For example, the sum (ΣA) of the lengths of all block edges 15 included in the outer crown land portion 4B is calculated as the square root of the sum of the square ((Σxi)²) of the sum Σxi of the components in the tire axial direction of all block edges 15 included in the outer crown land portion 4B and the square ((Σyi)²) of the sum Σyi of the components in the tire circumferential direction of all outer crown blocks 5 (√{(Σxi)² + (Σyi)²}). The sum of the lengths of the block edges 15 used to calculate the other block edge sum, the pattern block edge sum, and the pattern edge sum is also calculated in the same manner.

Hereinafter, more detailed configurations of the present embodiment will be described. Each configuration described below shows a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 1, each of the three circumferential grooves 3 extends linearly in the present embodiment. The circumferential groove 3 may extend, for example, in a zigzag or wavy manner.

The circumferential grooves 3 include a first circumferential groove 3A adjacent to the outer tread end To, a second circumferential groove 3B adjacent to the inner tread end Ti, and a third circumferential groove 3C located between the first circumferential groove 3A and the second circumferential groove 3B. The third circumferential groove 3C is closest to the tire equator C among the circumferential grooves 3. Therefore, the third circumferential groove 3C has a largest groove width w1c among the three circumferential grooves 3. Such a third circumferential groove 3C serves to smoothly remove ice adhering to the ground-contact surface 4a near the tire equator C during running on an icy road, and meltwater from ice (hereinafter referred to as "ice, etc.").

The groove width wlc of the third circumferential groove 3C is preferably 3% or more and further preferably 4% or more of the tread width TW and is preferably 7% or less and further preferably 6% or less of the tread width TW. A groove width w1a of the first circumferential groove 3A is preferably 65% or more and further preferably 70% or more of the groove width w1c of the third circumferential groove 3C and is preferably 85% or less and further preferably 80% or less of the groove width wlc. A groove width w1b of the second circumferential groove 3B is smaller than the groove width w1a of the first circumferential groove 3A in the present embodiment. The groove width w1b of the second circumferential groove 3B is preferably 80% or more and further preferably 85% or more of the groove width w1a of the first circumferential groove 3A and is preferably 95% or less and further preferably 90% or less of the groove width wla. The groove depth (not shown) of each circumferential groove 3 is preferably 7 to 12 mm, for example.

The four land portions 4 further include an inner shoulder land portion 4C including the inner tread end Ti and an inner crown land portion 4D adjacent to the inner shoulder land portion 4C. The entirety of the inner shoulder land portion 4C and the inner crown land portion 4D is located on the inner tread end Ti side with respect to the tire equator C.

If the width W2 of the outer crown land portion 4B is excessively large, the lateral stiffness of at least one of the other land portions 4 may become excessively small. Therefore, the width W2 of the outer crown land portion 4B is preferably 28% or more and further preferably 30% or more of the tread width TW and is preferably 45% or less and further preferably 40% or less of the tread width TW.

The inner crown land portion 4D is a land portion 4 on which a lateral force during cornering and a ground-contact pressure during straight running act relatively lightly. Therefore, in the present embodiment, the inner crown land portion 4D has a smallest width W4 in the tire axial direction among the four land portions 4. The width W4 of the inner crown land portion 4D is preferably 40% or more and further preferably 45% or more of the width W2 of the outer crown land portion 4B and is preferably 60% or less and further preferably 55% or less of the width W2.

Although not particularly limited, a width W1 in the tire axial direction of the outer shoulder land portion 4A is preferably 10% or more and further preferably 15% or more of the tread width TW and is preferably 30% or less and further preferably 25% or less of the tread width TW. In addition, a width W3 in the tire axial direction of the inner shoulder land portion 4C is preferably 90% or more and further preferably 95% or more of the width W1 of the outer shoulder land portion 4A and is preferably 110% or less and further preferably 105% or less of the width W1. The width W3 of the inner shoulder land portion 4C is, for example, the same as the width W1 of the outer shoulder land portion 4A.

The sum of the lengths of all block edges 15 and all sipes 17 included in the four land portions 4 is referred to as pattern edge sum ΣC. In this case, the outer crown block edge sum ΣA is preferably 10% or more and further preferably 13% or more of the pattern edge sum ΣC and is preferably 20% or less and further preferably 18% or less of the pattern edge sum ΣC. Since the outer crown block edge sum ΣA is 10% or more and 20% or less of the pattern edge sum ΣC, an appropriate edge effect is exhibited at the outer crown land portion 4B, and a decrease in the stiffness of the outer crown land portion 4B is also suppressed. Therefore, dry performance and on-ice performance are improved in a well-balanced manner.

FIG. 3B is a plan view of the sipe 17 for describing the "length" of the sipe 17. FIG. 3B shows the "length" of one sipe 17. In this specification, the "length" of the sipe 17 used to calculate the pattern edge sum and each sipe sum described later is specified as follows. The "length" is distinguished into a component ui in the tire axial direction and a component vi in the tire circumferential direction of a sipe width center line 17c of the sipe 17. The length of the sipe 17 shown in FIG. 3B is distinguished into components ui (u1, u2, ..., u6) in the tire axial direction and components vi (v1, v2, ..., v6) in the tire circumferential direction. In this case, the maximum value of i is 6. For example, the sum (ΣG) of the lengths of all sipes 17 included in the outer crown land portion 4B is calculated as the square root of the sum of the square ((Σui)²) of the sum Σui of the components in the tire axial direction of all sipes 17 included in the outer crown land portion 4B and the square ((Σvi)²) of the sum Σyi of the components in the tire circumferential direction of all sipes 17 (√{(Σui)²+(Σvi)²}). The sum of the lengths of the sipes 17 used to calculate the pattern edge sum and other sipe sums described later is also calculated in the same manner.

As shown in FIG. 2, the sum of the lengths of all block edges 15 included in the outer shoulder land portion 4A is referred to as outer shoulder block edge sum ΣD. The sum of the lengths of all block edges 15 included in the inner crown land portion 4D is referred to as inner crown block edge sum ΣE. The sum of the lengths of all block edges 15 included in the inner shoulder land portion 4C is referred to as inner shoulder block edge sum ΣF. In this case, it is preferable that the sum (ΣA + ΣD) of the outer crown block edge sum ΣA and the outer shoulder block edge sum ΣD is larger than the sum (ΣE + ΣF) of the inner crown block edge sum ΣE and the inner shoulder block edge sum ΣF. The outer crown land portion 4B and the outer shoulder land portion 4A are land portions 4 on which a lateral force during cornering acts relatively more strongly than on the inner crown land portion 4D and the inner shoulder land portion 4C. Therefore, by making the sum (ΣA + ΣD) larger than the sum (ΣE + ΣF), an effective edge effect can be exhibited during cornering, and thus on-ice performance can be further improved.

If the sum (ΣA + ΣD) is excessively larger than the sum (ΣE + ΣF), the lengths of the block edges 15 in the inner crown land portion 4D or the inner shoulder land portion 4C may become excessively small, so that stable running may become impossible during cornering where the inner tread end Ti side becomes the outer side of cornering. Therefore, the sum (ΣA + ΣD) is preferably 1.35 times or more and further preferably 1.40 times or more the sum (ΣE + ΣF) and is preferably 1.60 times or less and further preferably 1.55 times or less the sum (ΣE + ΣF).

The sum of the lengths of all sipes 17 included in the outer crown land portion 4B is referred to as outer crown sipe sum ΣG. In addition, the sum of the lengths of all sipes 17 included in the outer shoulder land portion 4A is referred to as outer shoulder sipe sum ΣH. Furthermore, the sum of the lengths of all sipes 17 included in the inner crown land portion 4D is referred to as inner crown sipe sum ΣI. Moreover, the sum of the lengths of all sipes 17 included in the inner shoulder land portion 4C is referred to as inner shoulder sipe sum ΣJ. Moreover, the ratio of the outer crown block edge sum ΣA to the outer crown sipe sum ΣG is referred to as ratio (ΣA/ΣG). In addition, the ratio of the outer shoulder block edge sum ΣD to the outer shoulder sipe sum ΣH is referred to as ratio (ΣD/ΣH). Furthermore, the ratio of the inner crown block edge sum ΣE to the inner crown sipe sum ΣI is referred to as ratio (ΣE/ΣI). In addition, the ratio of the inner shoulder block edge sum ΣF to the inner shoulder sipe sum ΣJ is referred to as ratio (ΣF/ΣJ). Generally, the edge effect of each block edge 15 is greater than the edge effect of each sipe 17. Therefore, by making the ratio of the sum of the lengths of the block edges 15 to the sum of the lengths of the sipes 17 relatively large in the outer crown land portion 4B, a great edge effect can be exhibited while the stiffness of the outer crown land portion 4B is maintained at a high level. Accordingly, on-ice performance and dry performance can be improved. From this viewpoint, it is preferable that the ratio (ΣA/ΣG) is larger than any of the ratio (ΣD/ΣH), the ratio (ΣE/ΣI), and the ratio (ΣF/ΣJ).

On the outer crown land portion 4B, a ground-contact pressure during straight running and a lateral force during cornering act relatively strongly. To improve on-ice performance and dry performance in a well-balanced manner, the ratio (ΣA/ΣG) is preferably 0.55 or more and further preferably 0.60 or more and is preferably 0.70 or less and further preferably 0.68 or less.

On the outer shoulder land portion 4A, a ground-contact pressure during straight running acts less strongly than on the outer crown land portion 4B. Therefore, the difference {{(ΣA/ΣG) - (ΣD/ΣH)} between the ratio (ΣA/ΣG) and the ratio (ΣD/ΣH) is preferably 0.15 or more and further preferably 0.17 or more and is preferably 0.30 or less and further preferably 0.27 or less. In addition, the difference {(ΣA/ΣG) - (ΣE/ΣI)} between the ratio (ΣA/ΣG) and the ratio (ΣE/ΣI) is preferably 0.05 or more and further preferably 0.07 or more and is preferably 0.15 or less and further preferably 0.12 or less. Similarly, the difference {(ΣA/ΣG) - (ΣF/ΣJ)} between the ratio (ΣA/ΣG) and the ratio (ΣF/ΣJ) is preferably 0.15 or more and further preferably 0.17 or more and is preferably 0.30 or less and further preferably 0.27 or less. Accordingly, on-ice performance and dry performance are further improved.

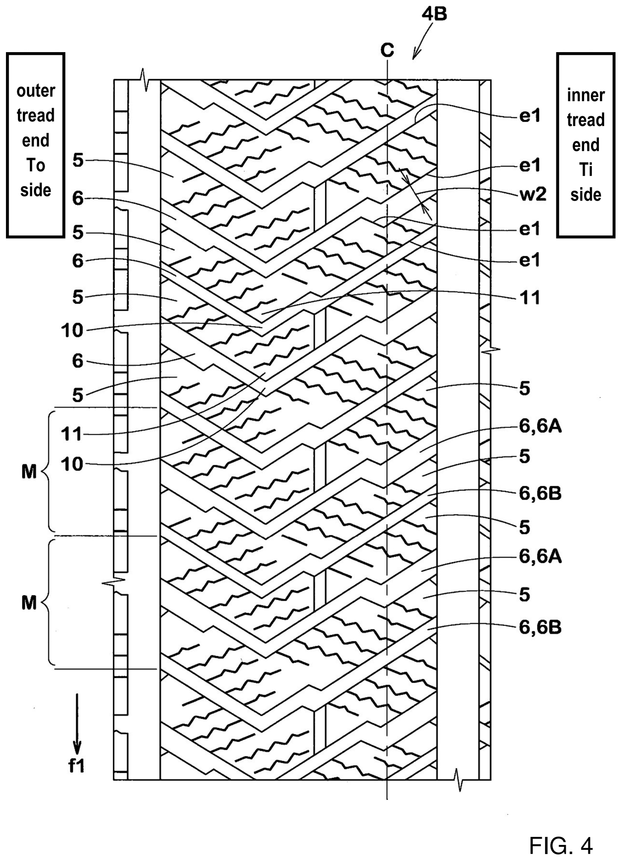

FIG. 4 is an enlarged view of FIG. 1. FIG. 4 shows the outer crown land portion 4B. As shown in FIG. 4, pattern configuration units M are arranged repeatedly in the tire circumferential direction in the outer crown land portion 4B. The outer crown land portion 4B also includes a first outer crown lateral groove 6A which completely extends across the pattern configuration unit M in the tire axial direction. Such a first outer crown lateral groove 6A divides the pattern configuration unit M into two outer crown blocks 5. Since the pattern configuration unit M is divided into two outer crown blocks 5, pattern noise caused by impact when the outer crown land portion 4B comes into contact with the ground is reduced.

The outer crown land portion 4B also includes the first outer crown lateral groove 6A and a second outer crown lateral groove 6B having a groove contour shape in a plan view different from that of the first outer crown lateral groove 6A. The first outer crown lateral groove 6A and the second outer crown lateral groove 6B are alternately arranged in the tire circumferential direction in the present embodiment. The second outer crown lateral groove 6B is formed so as to completely extend across the outer crown land portion 4B in the tire axial direction. In this specification, the first outer crown lateral groove 6A or the second outer crown lateral groove 6B is referred to as outer crown lateral groove 6. The outer crown lateral groove 6 has a groove width w2 of 1.0 mm or more. The groove width w2 of each outer crown lateral groove 6 is preferably 1.5 mm or more and more preferably 2.0 mm or more and is preferably 4.0 mm or less and more preferably 3.5 mm or less.

Each outer crown lateral groove 6 includes at least one main bent portion 10. Accordingly, each outer crown block 5 has a V-shape having an apex 11 projecting toward a first side f1 in the tire circumferential direction. Accordingly, a block edge e1, along the outer crown lateral groove 6, of the outer crown block 5 has an edge component in the tire circumferential direction and an edge component in the tire axial direction, thereby achieving both cornering performance and braking performance on ice and improving on-ice performance. In the present embodiment, a rotation direction R is designated such that ground contact starts from the apex 11 of the outer crown block 5. In the present embodiment, the leading side in the rotation direction R is the same as the first side f1 in the tire circumferential direction.

In this specification, the "apex" refers to a portion of the outer crown block 5 that projects most toward the first side f1 in the tire circumferential direction. In this specification, the "main bent portion" refers to a portion of the outer crown lateral groove 6 that projects most toward the first side f1 in the tire circumferential direction.

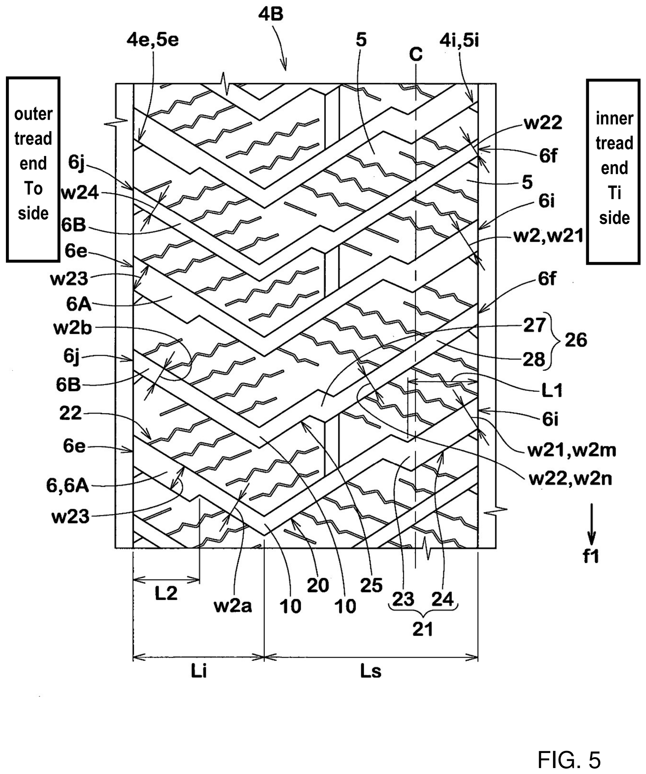

FIG. 5 is an enlarged view of FIG. 1. FIG. 5 shows the outer crown land portion 4B. As shown in FIG. 5, it is preferable that a groove width w21 at an inner end 6i in the tire axial direction of the first outer crown lateral groove 6A is different from a groove width w22 at an inner end 6f in the tire axial direction of the second outer crown lateral groove 6B. And/or, it is preferable that a groove width w23 at an outer end 6e in the tire axial direction of the first outer crown lateral groove 6A is different from a groove width w24 at an outer end 6j in the tire axial direction of the second outer crown lateral groove 6B. Accordingly, at at least one of an inner end 4i side in the tire axial direction or an outer end 4e side of the outer crown land portion 4B, it becomes easier to remove ice, etc., from an icy road surface, that have entered the outer crown lateral groove 6, and the stiffness of the outer crown land portion 4B is also maintained. Therefore, on-ice performance and dry performance can be maintained in a better balance.

In order to exhibit the above-described effect near the inner end 4i side and the outer end 4e side in the tire axial direction of the outer crown land portion 4B, it is preferable that the groove width w21 at the inner end 6i of the first outer crown lateral groove 6A is different from the groove width w22 at the inner end 6f of the second outer crown lateral groove 6B. In addition to this, it is further preferable that the groove width w23 at the outer end 6e of the first outer crown lateral groove 6A is different from the groove width w24 at the outer end 6j of the second outer crown lateral groove 6B.

In the present embodiment, the groove width w21 at the inner end 6i of the first outer crown lateral groove 6A is larger than the groove width w22 at the inner end 6f of the second outer crown lateral groove 6B. In addition, the groove width w23 at the outer end 6e of the first outer crown lateral groove 6A is larger than the groove width w24 at the outer end 6j of the second outer crown lateral groove 6B. On the other hand, if the difference between the groove width w21 at the inner end 6i of the first outer crown lateral groove 6A and the groove width w22 at the inner end 6f of the second outer crown lateral groove 6B becomes excessively large, the difference in stiffness in the tire circumferential direction on an inner end 5i side in the tire axial direction of the outer crown block 5 may become large. This may lead to a reduction in dry performance. Therefore, the groove width w21 at the inner end 6i of the first outer crown lateral groove 6A is preferably 1.5 times or more and further preferably 1.6 times or more the groove width w22 at the inner end 6f of the second outer crown lateral groove 6B and is preferably 2.1 times or less and further preferably 1.9 times or less the groove width w22. Similarly, the groove width w23 at the outer end 6e of the first outer crown lateral groove 6A is preferably 1.5 times or more and further preferably 1.6 times or more the groove width w24 at the outer end 6j of the second outer crown lateral groove 6B and is preferably 2.1 times or less and further preferably 1.9 times or less the groove width w24. Accordingly, the difference in stiffness in the tire circumferential direction on an outer end 5e side in the tire axial direction of the outer crown block 5 is maintained to be small. The groove width w21 at the inner end 6i of the first outer crown lateral groove 6A may be smaller than the groove width w22 at the inner end 6f of the second outer crown lateral groove 6B. In addition, the groove width w23 at the outer end 6e of the first outer crown lateral groove 6A may be smaller than the groove width w24 at the outer end 6j of the second outer crown lateral groove 6B.

The first outer crown lateral groove 6A includes a central portion 20, a first inner portion 21, and an outer portion 22. The central portion 20 includes the main bent portion 10 and extends in a V-shape with an equal groove width w2a. The first inner portion 21 connects the central portion 20 and the inner end 6i. The first inner portion 21 includes a first sub-bent portion 23 projecting toward the first side f1 in the tire circumferential direction and a first equal-width portion 24 connected to the first sub-bent portion 23 and extending to the inner end 6i with the equal width w21. The outer portion 22 connects the central portion 20 and the outer end 6e and extends with the equal groove width w23. The groove width w2a of the central portion 20 is smaller than the groove width w21 of the first equal-width portion 24 and the groove width w23 of the outer portion 22. In this specification, the "equal groove width" includes a mode in which the difference between the maximum and minimum groove widths is 1 mm or less.

Although not particularly limited, the groove width w2a of the central portion 20 is preferably 45% or more and further preferably 50% or more of the groove width w21 of the first equal-width portion 24 and is preferably 65% or less and further preferably 60% or less of the groove width w21. The groove width w21 of the first equal-width portion 24 is preferably 90% or more and further preferably 95% or more of the groove width w23 of the outer portion 22 and is preferably 110% or less and further preferably 105% or less of the groove width w23. In addition, a length L1 in the tire axial direction of the first equal-width portion 24 is preferably 20% or more and further preferably 25% or more of a length Ls in the tire axial direction between the main bent portion 10 and the inner end 6i of the first outer crown lateral groove 6A and is preferably 40% or less and further preferably 35% or less of the length Ls. Similarly, a length L2 in the tire axial direction of the outer portion 22 is preferably 40% or more and further preferably 45% or more of a length Li in the tire axial direction between the main bent portion 10 and the outer end 6e of the first outer crown lateral groove 6A and is preferably 60% or less and further preferably 55% or less of the length Li.

Moreover, a maximum groove width w2m of the first outer crown lateral groove 6A is preferably 1.5 times or more and further preferably 1.7 times or more a minimum groove width w2n of the second outer crown lateral groove 6B and is preferably 2.5 times or less and further preferably 2.3 times or less the minimum groove width w2n. The maximum groove width w2m of the first outer crown lateral groove 6A is, for example, the groove width w21 of the first equal-width portion 24 or the groove width w23 of the outer portion 22. The minimum groove width w2n of the second outer crown lateral groove 6B is, for example, the groove width w22 of a second equal-width portion 28 described later or a groove width w2b of a main portion 25 described later.

The second outer crown lateral groove 6B includes the main portion 25 including the main bent portion 10 and extending in a V-shape with the equal groove width w2b, and a second inner portion 26 connecting the main portion 25 and the inner end 6f. The main portion 25 extends to the outer end 6j of the second outer crown lateral groove 6B. The second inner portion 26 includes a second sub-bent portion 27 projecting toward the first side f1 in the tire circumferential direction, and the second equal-width portion 28 connected to the second sub-bent portion 27 and extending to the inner end 6f with the equal width w22. The groove width w2b of the main portion 25 is preferably 90% or more and further preferably 95% or more of the groove width w22 of the second equal-width portion 28 and is preferably 110% or less and further preferably 105% or less of the groove width w22. In the present embodiment, the groove width w2b of the main portion 25 and the groove width w22 of the second equal-width portion 28 are the same.

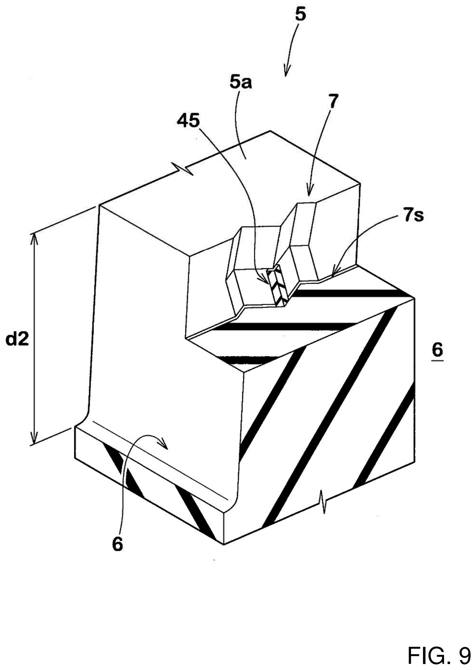

Each of the groove width w2a of the central portion 20 and the groove width w2b of the main portion 25 is preferably 3% or more and further preferably 4% or more of the width W2 (shown in FIG. 1) of the outer crown land portion 4B and is preferably 8% or less and further preferably 7% or less of the width W2. A groove depth d2 (shown in FIG. 9) of the outer crown lateral groove 6 is preferably 60% or more and further preferably 65% or more of the groove depth (not shown) of the circumferential groove 3 and is preferably 80% or less and further preferably 75% or less of the groove depth of the circumferential groove 3. In addition, the groove depth d2 of each outer crown lateral groove 6 is preferably 3.0 mm or more and further preferably 3.5 mm or more and is preferably 12 mm or less and further preferably 11 mm or less. The first outer crown lateral groove 6A has the same groove depth as the second outer crown lateral groove 6B.

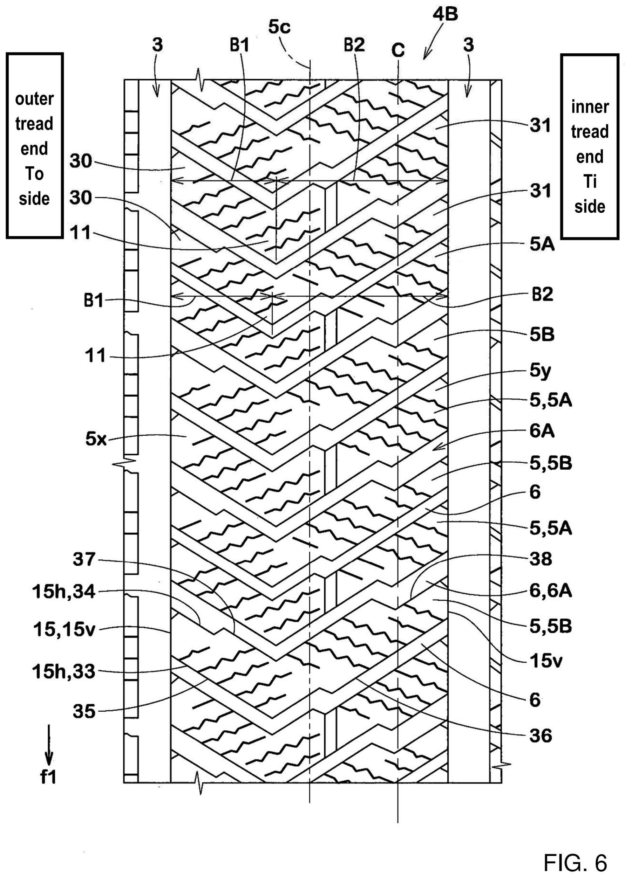

FIG. 6 is an enlarged view of FIG. 1. FIG. 6 shows the outer crown land portion 4B. As shown in FIG. 6, the outer crown blocks 5 include, for example, at least one first crown block 5A. The outer crown blocks 5 also include, for example, at least one second crown block 5B. In the present embodiment, the outer crown blocks 5 include a plurality of first crown blocks 5A and a plurality of second crown blocks 5B. The first crown blocks 5A and the second crown blocks 5B are alternately arranged in the tire circumferential direction in the present embodiment. Each second crown block 5B has a contour shape in a plan view different from that of each first crown block 5A.

Each outer crown block 5 includes an outer inclined portion 30 and an inner inclined portion 31. The outer inclined portion 30 extends, for example, from the apex 11 to an end portion 5x on the outer tread end To side of the outer crown block 5. In the present embodiment, the outer inclined portion 30 is inclined toward the side opposite to the first side f1 in the tire circumferential direction while extending from the apex 11 toward the end portion 5x. The inner inclined portion 31 extends, for example, from the apex 11 to an end portion 5y on the inner tread end Ti side of the outer crown block 5. In the present embodiment, the inner inclined portion 31 is inclined toward the side opposite to the first side f1 in the tire circumferential direction while extending from the apex 11 toward the end portion 5y. The outer inclined portion 30 and the inner inclined portion 31 are inclined in opposite directions with respect to the tire circumferential direction.

When the length in the tire axial direction of the outer inclined portion 30 is denoted by B1, and a length in the tire axial direction of the inner inclined portion 31 is denoted by B2, it is preferable that the following expression (1) is satisfied. $50 % \leq B 2 / \left(B1+B2\right) \leq 75 %$

In other words, the apex 11 is located between a center 5c in the tire axial direction of the outer crown block 5 and a position on the outer tread end To side from the center 5c where the distance in the tire axial direction from the center 5c is equal to 25% of the sum (B1 + B2) of the length B1 and the length B2. On the outer tread end To side from the center 5c of the outer crown block 5, a larger lateral force acts during cornering than on the inner tread end Ti side from the center 5c. In addition, at a position on the outer tread end To side from the center 5c where the distance from the center 5c exceeds 25% of the sum (B1 + B2), the longitudinal stiffness of the outer crown block 5 tends to become relatively low. Therefore, the outer crown block 5 in which the apex 11 is located at the above-described position effectively exhibits an edge effect due to the opposite inclinations of the outer inclined portion 30 and the inner inclined portion 31 connected to the apex 11, during cornering, and thus dry performance and on-ice performance can be improved. As shown in FIG. 6, the apex 11 of the first crown block 5A and the apex 11 of the second crown block 5B are displaced in the tire axial direction. Therefore, in the present embodiment, the length B1 of the outer inclined portion 30 of the first crown block 5A is different from the length B1 of the outer inclined portion 30 of the second crown block 5B. In addition, the sum (B1 + B2) is the width W2 (shown in FIG. 1) of the outer crown land portion 4B.

The block edge 15 of each outer crown block 5 includes a pair of longitudinal block edges 15v and a pair of lateral block edges 15h. The pair of longitudinal block edges 15v are located on both sides in the tire axial direction of the outer crown block 5. The pair of longitudinal block edges 15v are defined by the circumferential grooves 3. The pair of lateral block edges 15h connect both ends in the tire circumferential direction of the pair of longitudinal block edges 15v. Each lateral block edge 15h is defined by the outer crown lateral groove 6.

Each lateral block edge 15h is divided into a first block edge 33 located on the first side f1 in the tire circumferential direction and a second block edge 34 located on the opposite side in the tire circumferential direction from the first block edge 33. The first block edge 33 includes an outer first edge 35 defined by the outer inclined portion 30 and an inner first edge 36 defined by the inner inclined portion 31. The second block edge 34 includes an outer second edge 37 defined by the outer inclined portion 30 and an inner second edge 38 defined by the inner inclined portion 31.

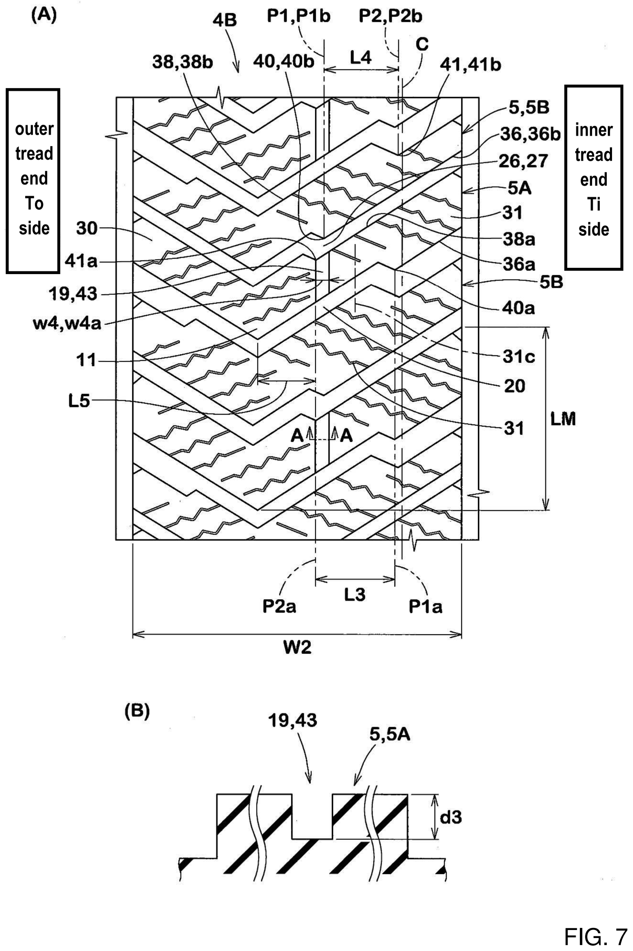

FIG. 7A is an enlarged view of FIG. 1. FIG. 7A shows the outer crown land portion 4B. As shown in FIG. 7A, in the outer crown block 5, the inner first edge 36 has a first bent portion 40 at a first position P1 in the tire axial direction. The inner second edge 38 has a second bent portion 41 at a second position P2 in the tire axial direction different from the first position P1. Accordingly, multidirectional edge effects are exhibited at different cornering angles, and thus on-ice performance is improved. In the present embodiment, in the first crown block 5A, a first position P1a of a first bent portion 40a of an inner first edge 36a is different in the tire axial direction from a second position P2a of a second bent portion 41a of an inner second edge 38a. In addition, in the present embodiment, in the second crown block 5B, a first position P1b of a first bent portion 40b of an inner first edge 36b is different in the tire axial direction from a second position P2b of a second bent portion 41b of an inner second edge 38b.

In the first crown block 5A, a separation distance L3 in the tire axial direction between the first position P1a and the second position P2a is preferably 13% or more and further preferably 15% or more of the width W2 of the outer crown land portion 4B and is preferably 28% or less and further preferably 25% or less of the width W2. In the second crown block 5B, a separation distance L4 in the tire axial direction between the first position P1b and the second position P2b is preferably 13% or more and further preferably 15% or more of the width W2 of the outer crown land portion 4B and is preferably 28% or less and further preferably 25% or less of the width W2. Accordingly, an edge effect can be effectively exhibited while a decrease in the block stiffness of the outer crown block 5 is suppressed.

Each of the first crown block 5A and the second crown block 5B has a V-shape having an apex 11, an outer inclined portion 30, and an inner inclined portion 31. In addition, a maximum length LM in the tire circumferential direction of the outer crown block 5 is preferably 45% or more and further preferably 50% or more of the width W2 of the outer crown land portion 4B and is preferably 65% or less and further preferably 60% or less of the width W2.

FIG. 7B is a cross-sectional view taken along a line A-A in FIG. 7A. As shown in FIG. 7A and FIG. 7B, in the first crown block 5A, for example, a sub-groove 19 extending in the tire circumferential direction so as to divide the inner inclined portion 31 is provided in the inner inclined portion 31. The sub-groove 19 has, for example, a groove width w4 of 1.0 mm or more and a smaller groove depth d3 than the outer crown lateral groove 6. Such a sub-groove 19 increases the edge component in the tire circumferential direction without excessively reducing the stiffness of the inner inclined portion 31. Accordingly, more stable cornering on ice is enabled. In this specification, for convenience, the sub-groove 19 provided in the first crown block 5A is referred to as first sub-groove 43. In the outer inclined portion 30 of the first crown block 5A, no sub-groove is provided.

The first sub-groove 43 is located, for example, on the apex 11 side with respect to a center 31c in the tire axial direction of the inner inclined portion 31, on the inner tread end Ti side from the apex 11. Accordingly, a decrease in the stiffness of the inner inclined portion 31 is reduced to be small. In order to effectively exhibit such an effect, a separation distance L5 in the tire axial direction between the apex 11 and the first sub-groove 43 is preferably 20% or more and further preferably 25% or more of the length B2 (shown in FIG. 6) of the inner inclined portion 31 and is preferably 40% or less and further preferably 35% or less of the length B2.

The first sub-groove 43 extends, for example, parallel to the tire circumferential direction. In the present embodiment, the first sub-groove 43 is connected to the central portion 20 and the second inner portion 26. The first sub-groove 43 is connected, for example, to the second sub-bent portion 27. Accordingly, a decrease in stiffness around the second bent portion 41a on which a relatively high ground-contact pressure is likely to act is suppressed, thereby enhancing dry performance.

Although not particularly limited, a groove width w4a of the first sub-groove 43 is, for example, preferably 20% or more and further preferably 25% or more of the groove width w1a (shown in FIG. 1) of the first circumferential groove 3A and is preferably 40% or less and further preferably 35% or less of the groove width w1a. The groove depth d3 of the first sub-groove 43 is, for example, preferably 60% or more and further preferably 65% or more of the groove depth d2 (shown in FIG. 9) of the outer crown lateral groove 6 and is preferably 80% or less and further preferably 75% or less of the groove depth d2.

Moreover, no groove having a groove width of 1.0 mm or more is provided in the inner inclined portion 31 of the second crown block 5B. Such a second crown block 5B maintains the stiffness of the inner inclined portion 31 of the second crown block 5B at a high level, thereby improving dry performance. As described above, the outer crown land portion 4B of the present embodiment alternately includes, in the tire circumferential direction, the first crown blocks 5A having the first sub-groove 43 and the second crown blocks 5B having no groove, and thus dry performance and on-ice performance can be improved in a well-balanced manner. In the outer inclined portion 30 of the second crown block 5B of the present embodiment as well, no groove having a groove width of 1.0 mm or more is provided.

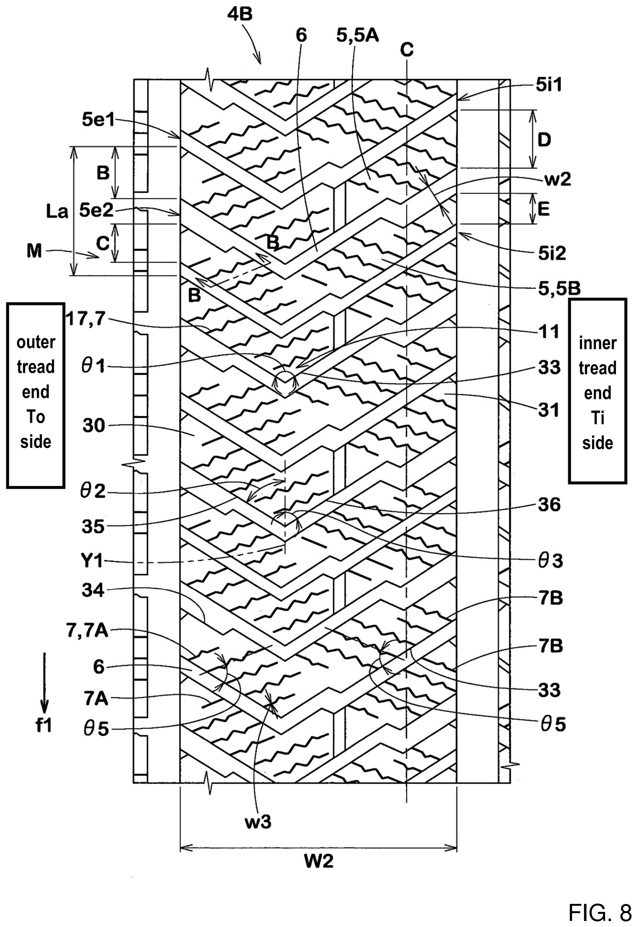

FIG. 8 is an enlarged view of FIG. 1. FIG. 8 shows the outer crown land portion 4B. As shown in FIG. 8, the length in the tire circumferential direction at an outer end 5e1 in the tire axial direction of the first crown block 5A is referred to as length B. The length in the tire circumferential direction at an outer end 5e2 in the tire axial direction of the second crown block 5B is referred to as length C. In this case, in each pattern configuration unit M, the sum (B + C) of the length B of the first crown block 5A and the length C of the second crown block 5B is preferably 60% or more and further preferably 64% or more of a length La in the tire circumferential direction of the pattern configuration unit M and is preferably 80% or less and further preferably 78% or less of the length La. Since the sum (B + C) is 60% or more of the length La of the pattern configuration unit M, the lengths B and C in the tire circumferential direction of the first crown block 5A and the second crown block 5B are ensured, and the stiffness in the tire circumferential direction of each outer crown block 5 is maintained at a high level. Since the sum (B + C) is 80% or less of the length La of the pattern configuration unit M, the groove width w2 of the outer crown lateral groove 6 can be ensured, and ice, etc., in the outer crown lateral groove 6 can be smoothly removed. Thus, on-ice performance is improved.

Moreover, the length in the tire circumferential direction at an inner end 5i1 in the tire axial direction of the first crown block 5A is referred to as length D. The length in the tire circumferential direction at an inner end 5i2 in the tire axial direction of the second crown block 5B is referred to as length E. In this case, in each pattern configuration unit M, the sum (D + E) of the length D of the first crown block 5A and the length E of the second crown block 5B is preferably 60% or more and further preferably 64% or more of the length La of the pattern configuration unit M and is preferably 80% or less and further preferably 78% or less of the length La. Accordingly, the above-described effect is effectively exhibited.

Each of the length B, the length C, the length D, and the length E is preferably 5% or more and further preferably 10% or more of the width W2 of the outer crown land portion 4B and is preferably 25% or less and further preferably 20% or less of the width W2. Since each of the length B, the length C, the length D, and the length E is 5% or more of the width W2 of the outer crown land portion 4B, the stiffness in the tire circumferential direction at the outer end 5e1 and the inner end 5i1 of the first crown block 5A and at the outer end 5e2 and the inner end 5i2 of the second crown block 5B is maintained at a high level, thereby enhancing dry performance. Since each of the length B, the length C, the length D, and the length E is 25% or less of the width W2 of the outer crown land portion 4B, the groove width w2 of the outer crown lateral groove 6 can be ensured, and ice, etc., in the outer crown lateral groove 6 can be smoothly removed.

An apex angle θ1 of the apex 11 of the outer crown block 5 is preferably 90 degrees or more, more preferably 100 degrees or more, and further preferably 110 degrees or more and is preferably 140 degrees or less, more preferably 130 degrees or less, and further preferably 120 degrees or less. Since the apex angle θ1 is 90 degrees or more, the stiffness of the apex 11 can be maintained at a high level. Since the apex angle θ1 is 140 degrees or less, an edge effect can be exhibited in multiple directions (two directions). In order to effectively exhibit such an effect, each of an angle θ2 between the outer inclined portion 30 and a line Y1 in the tire circumferential direction and an angle θ3 between the inner inclined portion 31 and the line Y1 in the tire circumferential direction is preferably 45 degrees or more and further preferably 50 degrees or more and is preferably 70 degrees or less and further preferably 65 degrees or less. The apex angle θ1 is defined by the first block edge 33 including the apex 11 of each outer crown block 5. The angle θ2 is defined by the outer first edge 35 and the line Y1 in the tire circumferential direction. The angle θ3 is defined by the inner first edge 36 and the line Y1 in the tire circumferential direction.

In addition, in each outer crown block 5, a plurality of sipes 7 having a width w3 of less than 1.0 mm are formed. The sipes 7 are included in the sipes 17. The sipes 7, together with the outer crown lateral grooves 6, moderately increase the edge components of the outer crown land portion 4B, and thus on-ice performance can be further improved.

The plurality of sipes 7 include first sipes 7A extending in a first extending direction and second sipes 7B extending in a second extending direction different from the first extending direction. Such first sipes 7A and second sipes 7B exhibit an edge effect in multiple directions, and thus on-ice performance is improved.

Each first sipe 7A of the present embodiment is provided in the outer inclined portion 30. Each second sipe 7B of the present embodiment is provided in the inner inclined portion 31. At least one first sipe 7A is connected, for example, to at least one of the first block edge 33 or the second block edge 34. The second sipe 7B is connected, for example, to at least one of the first block edge 33 or the second block edge 34. Such first sipe 7A and second sipe 7B exhibit a great edge effect.

Each first sipe 7A and each second sipe 7B are inclined in opposite directions with respect to the tire circumferential direction. The first sipe 7A is inclined toward the first side f1 in the tire circumferential direction while extending from the inner tread end Ti side toward the outer tread end To side. The first sipe 7A is inclined, for example, in a direction opposite to that of the outer inclined portion 30 with respect to the tire circumferential direction. The second sipe 7B is inclined toward the first side f1 in the tire circumferential direction while extending from the outer tread end To side toward the inner tread end Ti side. The second sipe 7B is inclined, for example, in a direction opposite to that of the inner inclined portion 31 with respect to the tire circumferential direction.

In the present embodiment, at least one of the sipes 7 is connected to the outer crown lateral groove 6 at an intersection angle θ5 of 35 to 65 degrees. Since the intersection angle 05 is 35 degrees or more and 65 degrees or less, the block stiffness of the outer crown block 5 between the sipe 7 and the outer crown lateral groove 6 is maintained at a high level, and the edge components provided by the sipe 7, the first block edge 33, and the second block edge 34 become multidirectional. Accordingly, dry performance and on-ice performance are improved. In order to effectively exhibit such an effect, the intersection angle θ5 is more preferably 40 degrees or more and more preferably 60 degrees or less. In the present embodiment, each of at least one of the first sipes 7A and at least one of the second sipes 7B is connected to the outer crown lateral groove 6 at an intersection angle θ5 of 35 to 65 degrees.

FIG. 9 is a cross-sectional view taken along a line B-B in FIG. 8. FIG. 9 shows a cross-section of the sipe 7 provided in the outer crown block 5. As shown in FIG. 8 and FIG. 9, in the present embodiment, at least one of the plurality of sipes 7 is a three-dimensional sipe that extends in a zigzag manner from a ground-contact surface 5a of the outer crown block 5 toward the inner side in the tire radial direction and extends in a zigzag manner on the ground-contact surface 5a. Such a three-dimensional sipe allows the opposing wall surfaces of the sipe 7 to firmly support each other during ground contact, thereby increasing the stiffness of the outer crown block 5 during ground contact. Thus, dry performance and on-ice performance are improved.

Moreover, at least one of the plurality of sipes 7 includes a shallow bottom portion 45 in which a sipe bottom 7s is raised, at the center in the extending direction thereof. The shallow bottom portion 45 suppresses a decrease in the stiffness of the outer crown block 5 to enhance dry performance. The plurality of sipes 7 may be sipes that do not include the shallow bottom portion 45. In the outer crown land portion 4B of the present embodiment, the number of sipes 7 each including the shallow bottom portion 45 is preferably 50% or more and further preferably 55% or more of the total number of all sipes 7 and is preferably 70% or less and further preferably 65% or less of the total number of all sipes 7.

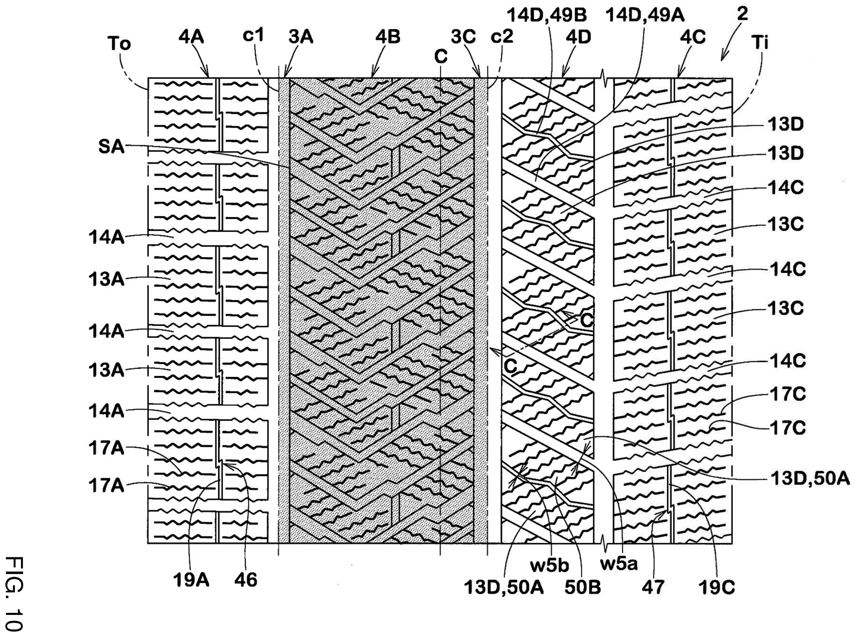

FIG. 10 is a development view of the tread portion 2. As shown in FIG. 10, from the viewpoint of exhibiting a great edge effect at the outer crown land portion 4B to further enhance on-ice performance, it is preferable that the land ratio of the outer crown land portion 4B is smaller than the land ratio of the tread portion 2. If the land ratio of the outer crown land portion 4B is excessively smaller than the land ratio of the tread portion 2, the stiffness of the outer crown land portion 4B on which a relatively high ground-contact pressure acts may become lower, which may deteriorate dry performance. Therefore, the land ratio of the outer crown land portion 4B is preferably 85% or more and further preferably 88% or more of the land ratio of the tread portion 2 and is preferably 97% or less and further preferably 94% or less of the land ratio of the tread portion 2. In addition, the land ratio of the outer crown land portion 4B is preferably 55% or more and further preferably 60% or more and is preferably 70% or less and further preferably 65% or less. In this specification, the "land ratio of the tread portion 2" refers to the ratio of the area of the ground-contact surface to the area of a virtual ground-contact surface obtained by filling each groove and each sipe. The "land ratio of the outer crown land portion 4B" refers to the ratio of the area of the ground-contact surface between groove width center lines c1 and c2 of the circumferential grooves 3A and 3C adjacent to the outer crown land portion 4B to the area of a virtual ground-contact surface SA obtained by filling each groove and each sipe between the groove width center lines c1 and c2. The virtual ground-contact surface SA is shown in FIG. 10.

The outer shoulder land portion 4A is provided with outer shoulder lateral grooves 14A arranged in the tire circumferential direction and outer shoulder blocks 13A demarcated by the outer shoulder lateral grooves 14A. Each outer shoulder block 13A is provided with a plurality of outer shoulder sipes 17A and a second sub-groove 19A extending in the tire circumferential direction so as to divide the outer shoulder block 13A. The second sub-groove 19A of the present embodiment is provided with a third bent portion 46 at a central portion in the tire circumferential direction thereof. In the outer shoulder land portion 4A, the outer shoulder lateral grooves 14A and the outer shoulder blocks 13A are alternately arranged in the tire circumferential direction.

The inner shoulder land portion 4C of the present embodiment is provided with inner shoulder lateral grooves 14C arranged in the tire circumferential direction and inner shoulder blocks 13C demarcated by the inner shoulder lateral grooves 14C. Each inner shoulder block 13C is provided with a plurality of sipes 17C and a third sub-groove 19C extending in the tire circumferential direction so as to divide the inner shoulder block 13C. The third sub-groove 19C of the present embodiment is provided with a fourth bent portion 47 at a central portion in the tire circumferential direction thereof. In the inner shoulder land portion 4C, the inner shoulder lateral grooves 14C and the inner shoulder blocks 13C are alternately arranged in the tire circumferential direction.

The inner crown land portion 4D of the present embodiment is provided with inner crown lateral grooves 14D arranged in the tire circumferential direction and inner crown blocks 13D demarcated by the inner crown lateral grooves 14D. The inner crown lateral grooves 14D extend, for example, inclined with respect to the tire axial direction. The inner crown lateral grooves 14D include, for example, a first inner crown lateral groove 49A extending linearly and a second inner crown lateral groove 49B extending in a zigzag manner. The first inner crown lateral groove 49A and the second inner crown lateral groove 49B are alternately arranged in the tire circumferential direction. A groove width w5a of the first inner crown lateral groove 49A is made larger than a groove width w5b of the second inner crown lateral groove 49B. The first inner crown lateral groove 49A allows ice, etc., to be smoothly removed therefrom. The second inner crown lateral groove 49B can exhibit an edge effect in multiple directions and can suppress an excessive decrease in the stiffness of the inner crown land portion 4D. Although not particularly limited, the groove width w5a of the first inner crown lateral groove 49A is preferably 3.5 times or more the groove width w5b of the second inner crown lateral groove 49B and is preferably 5.0 times or less and further preferably 4.5 times or less the groove width w5b. The groove width w5b of the second inner crown lateral groove 49B is preferably less than 1.5 mm and further preferably 1.4 mm or less.

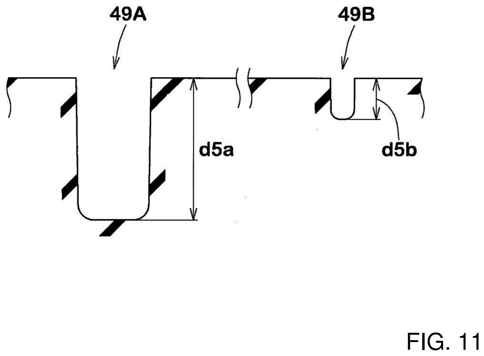

FIG. 11 is a cross-sectional view taken along a line C-C in FIG. 10. As shown in FIG. 10, a groove depth d5b of the second inner crown lateral groove 49B is preferably 22% or more and further preferably 27% or more of a groove depth d5a of the first inner crown lateral groove 49A and is preferably 42% or less and further preferably 37% or less of the groove depth d5a. The groove depth d5b of the second inner crown lateral groove 49B is, for example, preferably 1.5 mm or more and further preferably 2.0 mm or more and is preferably less than 3.0 mm and further preferably 2.8 mm or less.

The inner crown blocks 13D are formed of a first inner crown block 50A and a second inner crown block 50B having a contour shape in a plan view different from that of the first inner crown blocks 50A. The first inner crown block 50A and the second inner crown block 50B are alternately arranged in the tire circumferential direction.

Although the particularly preferable embodiment of the present invention has been described above in detail, the present invention is not limited to the above-described embodiment, and various modifications can be made to implement the present invention.

### [Additional Note]

The present invention includes the following aspects.

### [Present Invention 1]

A tire including a tread portion having a designated mounting direction to a vehicle, wherein
the tread portion includes an inner tread end located on an inner side of the vehicle when the tire is mounted on the vehicle, an outer tread end located on an outer side of the vehicle when the tire is mounted on the vehicle, and a tread width which is a distance in a tire axial direction from the inner tread end to the outer tread end,
the tread portion includes three circumferential grooves extending continuously in a tire circumferential direction with a groove width of 3.0 mm or more, and four land portions demarcated by the three circumferential grooves,
each of the four land portions includes a plurality of blocks demarcated by a plurality of lateral grooves which completely extend across the land portion in the tire axial direction with a groove width of 1.0 mm or more,
the land portions include an outer crown land portion adjacent to an outer shoulder land portion including the outer tread end,
a tire equator is located on a ground-contact surface of the outer crown land portion,
the outer crown land portion has a largest width in the tire axial direction among the four land portions,
the width of the outer crown land portion is 25% or more of the tread width,
each of the plurality of blocks has a block edge which defines a contour of a ground-contact surface thereof, and is formed with a plurality of sipes having a width of less than 1.0 mm, and
an outer crown block edge sum ΣA which is a sum of lengths of all the block edges included in the outer crown land portion is 35% to 50% of a pattern block edge sum ΣB which is a sum of lengths of all the block edges included in the four land portions.

### [Present Invention 2]

The tire according to Present Invention 1, wherein the outer crown block edge sum ΣA is 40% to 48% of the pattern block edge sum ΣB.

### [Present Invention 3]

The tire according to Present Invention 1 or 2, wherein the outer crown block edge sum ΣA is 10% to 20% of a pattern edge sum which is a sum of lengths of all the block edges and all of the plurality of sipes included in the four land portions.

### [Present Invention 4]

The tire according to Present Invention 1, wherein
the four land portions include an inner crown land portion adjacent to an inner shoulder land portion including the inner tread end, and
a sum (ΣA + ΣD) of the outer crown block edge sum ΣA and an outer shoulder block edge sum ΣD which is a sum of lengths of all the block edges included in the outer shoulder land portion is larger than a sum (ΣE + ΣF) of an inner crown block edge sum ΣE which is a sum of lengths of all the block edges included in the inner crown land portion and an inner shoulder block edge sum ΣF which is a sum of lengths of all the block edges included in the inner shoulder land portion.

### [Present Invention 5]

The tire according to Present Invention 4, wherein the sum (ΣA + ΣD) is 1.35 to 1.60 times the sum (ΣE + ΣF).

### [Present Invention 6]

The tire according to Present Invention 1, wherein
the four land portions include an inner crown land portion adjacent to an inner shoulder land portion including the inner tread end, and
a ratio (ΣA/ΣG) of the outer crown block edge sum ΣA to an outer crown sipe sum ΣG which is a sum of lengths of all the sipes included in the outer crown land portion is larger than any of: a ratio (ΣD/ΣH) of an outer shoulder block edge sum ΣD, which is a sum of lengths of all the block edges included in the outer shoulder land portion, to an outer shoulder sipe sum ΣH which is a sum of lengths of all the sipes included in the outer shoulder land portion; a ratio (ΣE/ΣI) of an inner crown block edge sum ΣE, which is a sum of lengths of all the block edges included in the inner crown land portion, to an inner crown sipe sum ΣI which is a sum of lengths of all the sipes included in the inner crown land portion; and a ratio (ΣF/ΣJ) of an inner shoulder block edge sum ΣF, which is a sum of lengths of all the block edges included in the inner shoulder land portion, to an inner shoulder sipe sum ΣJ which is a sum of lengths of all the sipes included in the inner shoulder land portion.

### [Present Invention 7]

The tire according to Present Invention 6, wherein the ratio (ΣA/ΣG) is 0.55 to 0.70.

### [Present Invention 8]

The tire according to Present Invention 6, wherein a difference {(ΣA/ΣG) - (ΣD/ΣH)} between the ratio (ΣA/ΣG) and the ratio (ΣD/ΣH) is 0.15 to 0.30.

### [Present Invention 9]

The tire according to any one of Present Inventions 1 to 8, wherein a land ratio of the outer crown land portion is smaller than a land ratio of the tread portion.

### [Present Invention 10]

The tire according to Present Invention 9, wherein the land ratio of the outer crown land portion is 85% to 97% of the land ratio of the tread portion.

## Claims

1. A tire (1) comprising a tread portion (2) having a designated mounting direction to a vehicle, wherein
the tread portion (2) includes an inner tread end (Ti) located on an inner side of the vehicle when the tire (1) is mounted on the vehicle, an outer tread end (To) located on an outer side of the vehicle when the tire (1) is mounted on the vehicle, and a tread width (TW) which is a distance in a tire axial direction from the inner tread end (Ti) to the outer tread end (To),
the tread portion (2) includes three circumferential grooves (3) extending continuously in a tire circumferential direction with a groove width (w1) of 3.0 mm or more, and four land portions (4) demarcated by the three circumferential grooves (3),
each of the four land portions (4) includes a plurality of blocks (13) demarcated by a plurality of lateral grooves (14) which completely extend across the land portion (4) in the tire axial direction with a groove width (wa) of 1.0 mm or more,
the land portions (4) include an outer crown land portion (4B) adjacent to an outer shoulder land portion (4A) including the outer tread end (To),
a tire equator (C) is located on a ground-contact surface (4a) of the outer crown land portion (4B),
the outer crown land portion (4B) has a largest width (W2) in the tire axial direction among the four land portions (4),
the width (W2) of the outer crown land portion (4B) is 25% or more of the tread width (TW),
each of the plurality of blocks (13) has a block edge (15) which defines a contour of a ground-contact surface (13a) thereof, and is formed with a plurality of sipes (17) having a width (wb) of less than 1.0 mm, and
an outer crown block edge sum ΣA which is a sum of lengths of all the block edges (15) included in the outer crown land portion (4B) is 35% to 50% of a pattern block edge sum ΣB which is a sum of lengths of all the block edges (15) included in the four land portions (4).

2. The tire (1) according to claim 1, wherein the outer crown block edge sum ΣA is 40% to 48% of the pattern block edge sum ΣB.

3. The tire (1) according to claim 1 or 2, wherein the outer crown block edge sum ΣA is 10% to 20% of a pattern edge sum which is a sum of lengths of all the block edges (15) and all of the plurality of sipes (17) included in the four land portions (4).

4. The tire (1) according to any one of claims 1 to 3, wherein
the four land portions (4) include an inner crown land portion (4D) adjacent to an inner shoulder land portion (4C) including the inner tread end (Ti), and
a sum (ΣA + ΣD) of the outer crown block edge sum ΣA and an outer shoulder block edge sum ΣD which is a sum of lengths of all the block edges (15) included in the outer shoulder land portion (4A) is larger than a sum (ΣE + ΣF) of an inner crown block edge sum ΣE which is a sum of lengths of all the block edges (15) included in the inner crown land portion (4D) and an inner shoulder block edge sum ΣF which is a sum of lengths of all the block edges (15) included in the inner shoulder land portion (4C).

5. The tire (1) according to claim 4, wherein the sum (ΣA + ΣD) is 1.35 to 1.60 times the sum (ΣE + ΣF).

6. The tire (1) according to any one of claims 1 to 5, wherein
the four land portions (4) include an inner crown land portion (4D) adjacent to an inner shoulder land portion (4C) including the inner tread end (Ti), and
a ratio (ΣA/ΣG) of the outer crown block edge sum ΣA to an outer crown sipe sum ΣG which is a sum of lengths of all the sipes (17) included in the outer crown land portion (4B) is larger than any of: a ratio (ΣD/ΣH) of an outer shoulder block edge sum ΣD, which is a sum of lengths of all the block edges (15) included in the outer shoulder land portion (4A), to an outer shoulder sipe sum ΣH which is a sum of lengths of all the sipes (17) included in the outer shoulder land portion (4A); a ratio (ΣE/ΣI) of an inner crown block edge sum ΣE, which is a sum of lengths of all the block edges (15) included in the inner crown land portion (4D), to an inner crown sipe sum ΣI which is a sum of lengths of all the sipes (17) included in the inner crown land portion (4D); and a ratio (ΣF/ΣJ) of an inner shoulder block edge sum ΣF, which is a sum of lengths of all the block edges (15) included in the inner shoulder land portion (4C), to an inner shoulder sipe sum ΣJ which is a sum of lengths of all the sipes (17) included in the inner shoulder land portion (4C).

7. The tire (1) according to claim 6, wherein the ratio (ΣA/ΣG) is 0.55 to 0.70.

8. The tire (1) according to claim 6 or 7, wherein a difference {(ΣA/ΣG) - (ΣD/ΣH)} between the ratio (ΣA/ΣG) and the ratio (ΣD/ΣH) is 0.15 to 0.30.

9. The tire (1) according to any one of claims 1 to 8, wherein a land ratio of the outer crown land portion (4B) is smaller than a land ratio of the tread portion (2).

10. The tire (1) according to claim 9, wherein the land ratio of the outer crown land portion (4B) is 85% to 97% of the land ratio of the tread portion (2).
